Europäisches Patentamt

European Patent Office

Office européen des brevets

(11) Publication number: **0 499 938 A1**

## EUROPEAN PATENT APPLICATION

(21) Application number: **92102198.6**

(22) Date of filing: **10.02.92**

(51) Int. Cl.5: **E04B 2/76, A47B 47/02,**
**A47B 96/14, F16B 12/36**

Italian Priority: 22.02.1991 VI91A000031.

(30) Priority: **22.02.91**

(43) Date of publication of application:
**26.08.92 Bulletin 92/35**

(84) Designated Contracting States:
**AT BE CH DE DK ES FR GB GR LI LU NL SE**

(71) Applicant: **FONTANA SYSTEM S.r.l.**
**Via Albereria, 68**
**I-36050 Bolzano Vicentino (VI)(IT)**

(72) Inventor: **Fontana, Renato**
**Via Paradiso, 174**
**I-36100 Vicenza(IT)**

(74) Representative: **Bonini, Ercole**
**c/o STUDIO ING. E. Bonini SAS 8 Corso**
**Fogazzaro**
**I-36100 Vicenza(IT)**

(54) **A reticular modular structure.**

(57) According to the invention a reticular modular structure is realized, suited for the construction of shelves, mezzanine floors and the like. Said reticular structure comprises a plurality of vertical standards (2) connected with each other by means of a plurality of horizontal beams (3), the connection of each standard (2) at the end of each beam (3) lying in the same plane being realized by means of a connecting element (13) placed between the beam (3) and the standard (2). Said connecting element (13) is a prismatic body fixed at one side of the vertical standard (2) and inserted in the U-shaped end of the beam (3) to which it is connected through connection means (13).

FIG.3

EP 0 499 938 A1

The invention concerns the realization of a modular reticular structure, particularly suited for the realization of shelves, mezzanine floors and the like.

It is known that shelves and mezzanine floors are reticular structures consisting of a series of standards and a series of horizontal beams connected to the standards by means of mechanical connection means. In particular, shelves are reticular structures suited to hold various materials, whether loose or palletized, while mezzanine floors are reticular structures suited to sustain at a certain height other shelves, or apted to support stamping planes or load planes for various uses.

In such structures, the connection between the standards and the horizontal beams is realized by means of a known technique which consists of the insertion of one or more hooks, placed in the terminal part of the beam, inside a suited pocket or slot belonging to the standard.

This connection system presents, however, various disadvantages, the most important of which is that the capacity load of the beams is limited by the tearing resistance of the hooks which insert in the slots made in the standards.

In fact, said hooks generally present the same thickness as that of the sheet of which the beams are made, which is often very thin.

Another disadvantage is that a mechanical working at the ends of the beams is needed for the realization of of the hooks, which is rather laborious.

Yet another disadvantage is that, due to their shape, the hooks can present some stress raiser.

In order to overcome the above mentioned disadvantages, the patent N. 85658/A/89 has been realized, due to the same inventor, in which metallic shelves are realized, composed of vertical standards connected to front and rear horizontal beams, each beam being connected to its respective standard by means of at least a horizontal pin housed inside holes made both in the end of the beam and in the standard walls. The holes, which are rectangular-shaped, have the main axis converging on the center of the standard, so guaranteeing a better stability to the structure.

Such a realization guarantees high security from the static point of view, but greatly limits the possibility of composition of reticular structures different from each other. In fact, as the ends of the beams are U-shaped with their concavity turned to the standard, they couple with the standard itself along three of its four walls which are orthogonal to each other, so that only two co-planar beams can be connected to each standard; said beams can only be disposed lined up with each other. Thus, the junction between the standard and the beam realized according to the above mentioned patent does not allow the composition of mezzanine floor structures which need for their realization the connection of two or more co-planar beams to the same standard, the beams being othogonally disposed or, in any case, in non parallel directions.

The goal of the present invention is to overcome this limitation by realizing a modular reticular structure, consisting of standards and beams in which two or more beams can be connected to each standard, the beams being co-planar and arranged at an angular position with each other.

The proposed goal is reached through the realization of a reticular modular structure which, according to the main claim, consists of a plurality of vertical standards having a poligonal cross section, connected to each other by means of a plurality of horizontal beams, each of which having a U-shaped end with its concavity turned to the surface of the vertical standard to which it is connected, and is characterized in that the connection between each standard and the end of each beam connected to it in the same plane is realized by means of a connecting element placed between the standard and the beam, said connecting element being a body presenting at least a plane surface fixed to the vertical standard, and at least two sides parallel to each other and inserted in the U-shaped end of the beam presenting lateral holes suited to receive means of connection between said connecting elements and the end of each beam.

Advantageously, according to the invention, modular structures can be realized in which two or more co-planar beams, not necessarily parallel, depart from each vertical standard. Shelves and mezzanine floors can then be composed that, though the same standards and beams are used, have different shapes. According to a preferred form of realization, the reticular structure of the invention consists of a connecting element between the beam and the standard, composed of a U-shaped section fixed to the standard by means of mechanical locking means, for example screws, and arranged with its concavity turned to the concavity of the U-shaped end of the beam to which it is coupled. Both in the lateral walls of the U-shaped section and in the lateral walls of the end of the beam, passing-through holes are made, having a rectangular section with the main axis converging on the longitudinal axis of the vertical standard. The connection between the beam and the standard is realized by means of removable pins inserted in said holes.

The above mentioned purposes and advantages will be better understood from the description of a preferred form of execution of the invention, which is only given by way of illustration, but is not meant to limit the scope of the invention, such as it is illustrated in the alleged tables of drawings, wherein:

- fig. 1 shows in axonometric view a mezzanine floor realized according to the reticular structure of the invention;
- fig. 2 shows in axonometric view a detail of two co-planar beams arranged at 90 degrees each another and connected to the same standard, one of which is in exploded view;
- fig. 3 shows in axonometric view the detail of a standard connected to four co-planar beams at 90 degrees each other;
- fig. 4 shows in axonometric view a detail of a standard connected to three co-planar beams orthogonally disposed to one another.

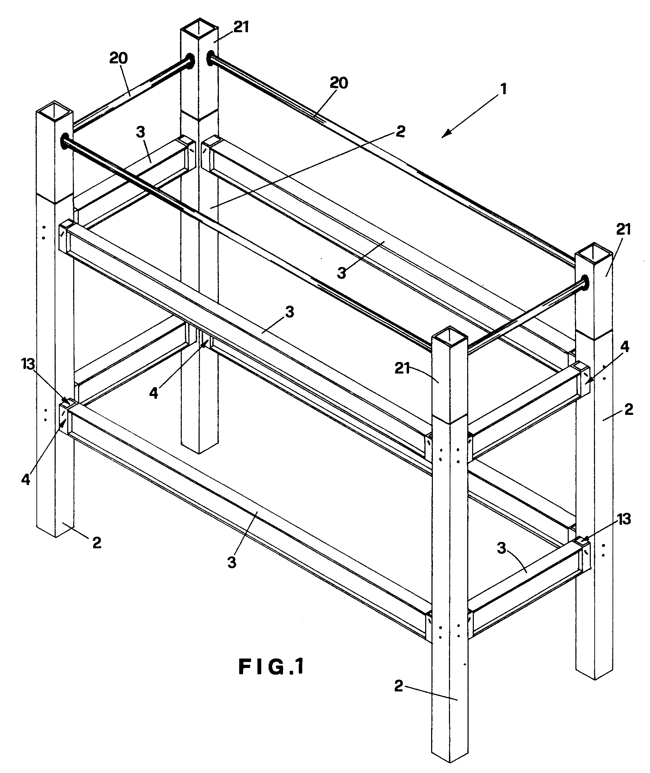

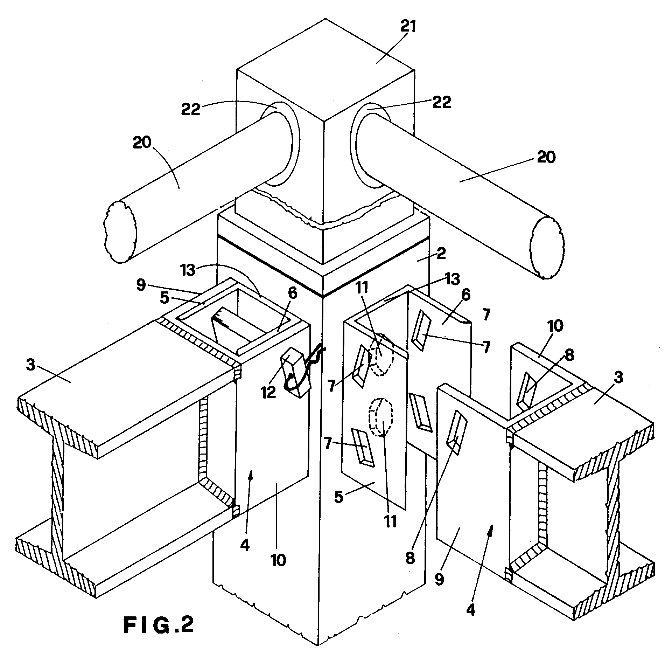

With reference to the above mentioned figures, and particularly to figs. 1 and 2, it can be observed that the mezzanine floor, composed by the reticular structure of the invention and indicated as a whole with 1, consists of standards 2 to which beams 3 are connected arranged at 90 degrees to each other and with respect to the standards.

The connection of the end 4 of each beam 3 and the respective standard 2 is realized by means of a connecting element made by a U-shaped connecting section 13 fixed to the standard by means of screws 11.

Each parallel wall 5 and 6 of the U-shaped connecting section 13 presents rectangular-sectioned holes 7, each hole coupling with the correspondent rectangular section holes 8 made in the parallel walls 9 and 10 of the U-shaped end 4 of each beam 3.

In order to connect each beam 3 to the standard 2 it is sufficient to couple its end 4 with the connecting element which is the U-shaped connecting section 13 by coaxially arranging the holes 7 and 8 in such a manner that they can receive the pin 12 which is to be inserted into them. After the insertion of the pin 12 has taken place, the beam 3 is fixedly connected to the standard 2.

Obviously, the connecting element (13) can have a form different from a U-shaped section, and it can consist of a not hollow prismatic block, or of a tubular section having any form.

It is also obvious that in case the connecting element is the previously described U-shaped section, it can be fixed to the standard 2 by means of mechanical connection means other than screws, or can be also welded. Moreover, it can be fixed to the standard with its concavity turned to the standard itself, rather than to the end of the beam to which it is connected.

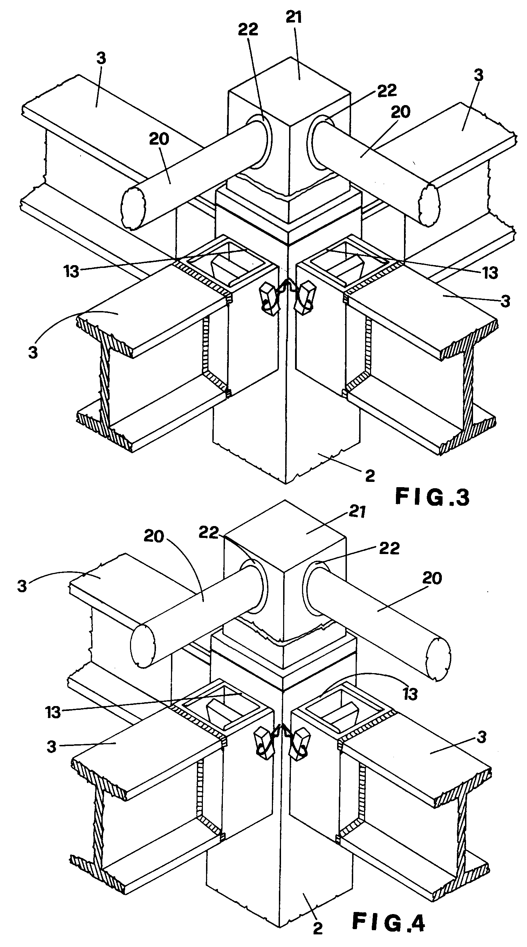

However, whatever the shape of the connecting element, in fig. 3 it can be observed that using four of such connecting elements (in the represented case consisting of U-shaped sections 13) it is possible to connect four beams 3, orthogonally disposed and co-planar, to a vertical standard 2. Analogously, as can be observed in fig. 4, by using only three of said connecting elements it is possible to connect three co-planar beams to the same standard 2.

Thus, it is possible to realize modular structures suited for the creation of mezzanine floors of any form or configuration, particularly in case the standard presents a poligonal section; in this case the number of co-planar beams which is possible to connect increases with the number of the faces of the standard itself.

As can be observed in fig. 1 and also in fig. 2, in case the reticular structure of the invention with the connecting element is employed for the construction of mezzanine floors, in the upper part of each standard 2 tubular handrails 20 are arranged, for security reasons, which are fixed, by means of restrained removable flanges 22, to removable columns 21 telescopically inserted in the upper part of the head of each standard 2.

According to what has been said, it is understood that the invention reaches the desired purpose of realizing modular structures having more co-planar beams connected to the same standard, arranged not parallel to one another so as to realize modular structures having different forms and variously configured.

In the realization phase, the measures and the shape of the described connecting element for beams and standards can be varied. It is understood, however, that all said variations and modifications do not exceed the scope of the present invention.

**Claims**

1. A reticular modular structure comprising a plurality of vertical standards (2) having a poligonal cross section, connected with each other by means of a plurality of horizontal beams (3), each presenting a U-shaped end (4) with the concavity turned to the surface of the vertical standard to which it is connected, characterized in that the connection between each standard (2) and the end (4) of each beam connected to it in the same plane is realized by means of a connecting element (13) interposed between the beam and the standard, said connecting element being a body presenting at least a plane surface fixed to the vertical standard, and at least two sides (56) parallel to each other and inserted in the U-shaped end (4) of the beam, and presenting holes (7) suited to receive connection means between said connecting element and the end of each beam.

2. A reticular structure according to claim 1), characterized in that the connecting element (13) is removably fixed to the standard by means of mechanical means.

3. A reticular structure according to claim 1), characterized in that the connecting element (13) is fixed to the standard by welding.

4. A reticular structure according to claim 1), characterized in that the connecting element (13) is fixed inside the U-shaped section of the end (4) of each beam through at least a pin (12) inserted in holes (7,8) placed in correspondence with one another and made both in the connecting element (13) and in the end (4) of the beam itself.

5. A reticular structure according to claim 4), characterized in that the holes (7,8) made both in the connecting element and in the end of the beam and inside which the removable connecting pin is inserted, present a rectangular cross section having the main axis converging to the longitudinal axis of the standard.

6. A reticular structure according to claim 1), characterized in that the connecting element (13) is a U-shaped section.

7. A reticular structure according to claim 6), characterized in that the U-shaped section which forms the connecting element (13) is placed with its concavity turned to the concavity of the U-shaped profile of the end (4) of the beam to which it is connected.

8. A reticular structure according to claim 6), characterized in that the U-shaped section which forms the connecting element (13) is placed with its concavity turned to the surface of the standard to which it is applied.

9. A reticular structure according to claim 1), characterized in that the connecting element (13) is a tubular shaped section.

10. A reticular structure according to claim 1), characterized in that the connecting element (13) is a not hollow prismatic element.

FIG.1

FIG.2

F I G.3

F I G.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 036 235 (XANTHOS MENEALOU) | 1,2,6,7 | E04B2/76 |
| Y | * page 2, line 20 - line 64; figures 3,4 * | 3-5 | A47B47/02 |
| | --- | | A47B96/14 |
| Y | FR-A-2 152 500 (HITACHI SHIPBUILDING & ENGINEERING CO LTD) | 3 | F16B12/36 |
| | * page 4, line 11 - line 35; figures 5,6 * | | |
| | --- | | |
| Y | BE-A-655 934 (PALMER-SHILE CO) | 4,5 | |
| | * page 4, line 24 - page 6, line 10 * | | |
| | * figures 1,2,5,6 * | | |
| | --- | | |
| A | US-A-3 552 783 (TAVANO) | 1,6,7 | |
| | * column 2, line 7 - line 44; figures 1,2 * | | |
| | --- | | |
| A | FR-A-2 539 442 (PLACOPLATRE) | 8 | |
| | * page 5, line 28 - page 6, line 10 * | | |
| | * figures 1-3 * | | |
| | --- | | |
| A | FR-A-2 522 708 (COMABI S.A.) | 9 | |
| | * page 4, line 14 - page 5, line 11 * | | |
| | * figures 1-3 * | | **TECHNICAL FIELDS SEARCHED (Int. Cl.5)** |
| | --- | | |
| A | FR-A-2 159 940 (HUNNEBECK GMBH) | 10 | |
| | * page 2, line 16 - page 3, line 18 * | | E04B |
| | * figures 1-5 * | | A47B |
| | | | F16B |
| | ----- | | E04G |

The present search report has been drawn up for all claims

| Place of search | Date of completion of the search | Examiner |
|---|---|---|
| THE HAGUE | 05 JUNE 1992 | PORWOLL H.P. |

EPO FORM 1503 03.82 (P0401)